# EUROPÄISCHE PATENTSCHRIFT

(11) **EP 1 306 357 B1**
(45) Veröffentlichungstag und Bekanntmachung des Hinweises auf die Patenterteilung: **31.07.2013**
(21) Anmeldenummer: 02450243.7
(22) Anmeldetag: 24.10.2002
(51) Int. Cl.: C04B 24/26

(54) **Zementreduzierte Beschichtungen**
Coatings with reduced cement content
Revêtements à contenu réduit de ciment

(30) Priorität: 25.10.2001 AT 82801 U
(43) Veröffentlichungstag der Anmeldung: 02.05.2003
(73) Patentinhaber: BASF SE, 67056 Ludwigshafen (DE)
(72) Erfinder: Mayer, Gerald, 1210 Wien (AT); Axmann, Heinz, Dr., 3400 Klosterneuburg (AT)

(56) Entgegenhaltungen:
- EP-A- 0 656 328
- EP-A- 0 782 977
- CH-A- 322 566
- DE-A- 4 225 076
- GB-A- 1 113 205
- US-A- 4 778 529

## Beschreibung

Es ist bekannt, Kombinationen von Zement mit wässrigen Kunststoffdispersionen als Betonsanierungssysteme oder als Abdichtungssysteme zu verwenden, siehe beispielsweise die AT-Patente 381.696 und 403.914. Man erhält dabei rißüberbrückende Beschichtungen, das heißt Beschichtungen mit hoher Dehnung.

Des Weiteren offenbart die DE-A 4225076 Zementmischungen, welche zur Beschichtung von Gestein und Ausrüstungen zum Schutz vor Wasser, Luft und Gasen eingesetzt werden. Entsprechend werden Zementformulierungen offenbart, welche bis zu 80 Gew.-% Portlandzement und zu 5 bis 70 Gew.-% einer 50 gew.-%igen wässrigen, nichtvernetzbaren Butylacrylat/Styrol-Copolymerisatdispersion enthalten.

Dagegen offenbart die GB-A 1,113,205 puzzolanhaltige Zementmischungen, welche niedermolekulare epoxidgruppenhaltige Verbindungen sowie mit diesen reagierende niedermolekulare vernetzende Verbindungen als Monomerbausteine zur Ausbildung von Harzen enthalten. Die Verwendung bzw. die Ausbildung wässriger Kunststoffdispersionen wird jedoch weder offenbart noch nahe gelegt.

Nach dem Auftrocknen bildet sich in der Beschichtung eine kontinuierliche Polymermatrix aus, die dann im wesentlichen die chemischen und physikalischen Eigenschaften, wie Zugfestigkeit, Reißdehnung und Elastizitätsmodul, sowie die chemische Beständigkeit, Wasseraufnahme, Stabilität gegenüber Alkalien usw. bestimmt.

Bildet sich hingegen nach der Trocknung eine kontinuierliche Zementmatrix aus, so bestimmt diese die chemischen und physikalischen Eigenschaften. Der Kunststoff ist dann lediglich in den Kapillaren der Zementmatrix verteilt.

Es zeigt sich nun, daß in Systemen, bei denen sich zunächst eine kontinuierliche Polymermatrix ausbildet, der Zement nach Ausbildung der Beschichtung nur zu einem geringen Teil hydratisiert ist. Bei dieser teilweisen Hydratation werden aber genügend mehrwertige Ionen, insbesonders Ca²⁺-Ionen in Form von gelöstem Ca(OH)₂ frei, die mit funktionellen Gruppen des umhüllenden Polymers reagieren, Salze bilden und damit zu einer physikalischen Vernetzung führen. Diese Vernetzungsreaktionen finden gleichzeitig mit dem physikalischen Auftrocknungsprozeß statt.

Weiterhin werden auch andere Vernetzungsreaktionen von Polymeren in der Literatur beschrieben, die zum Teil durch das alkalische Milieu in dem System verursacht werden. Diese Reaktionen finden allmählich über einen längeren Zeitraum, insbesondere bei einer höheren Restfeuchte von über 10% in der Beschichtung statt. Eine Auswahl von möglichen Reaktionen ohne Anspruch auf Vollständigkeit stellt Tabelle 1 dar.

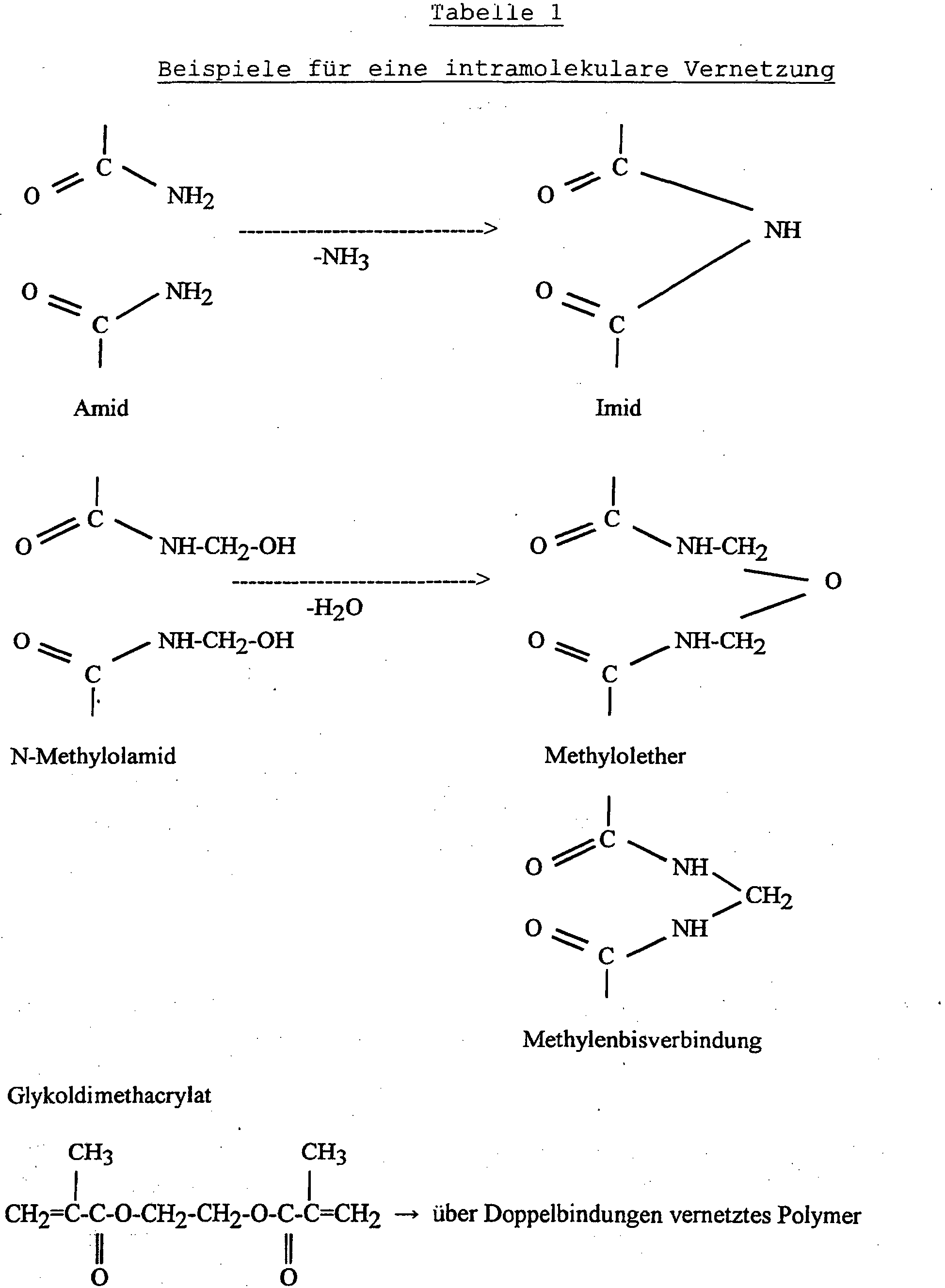

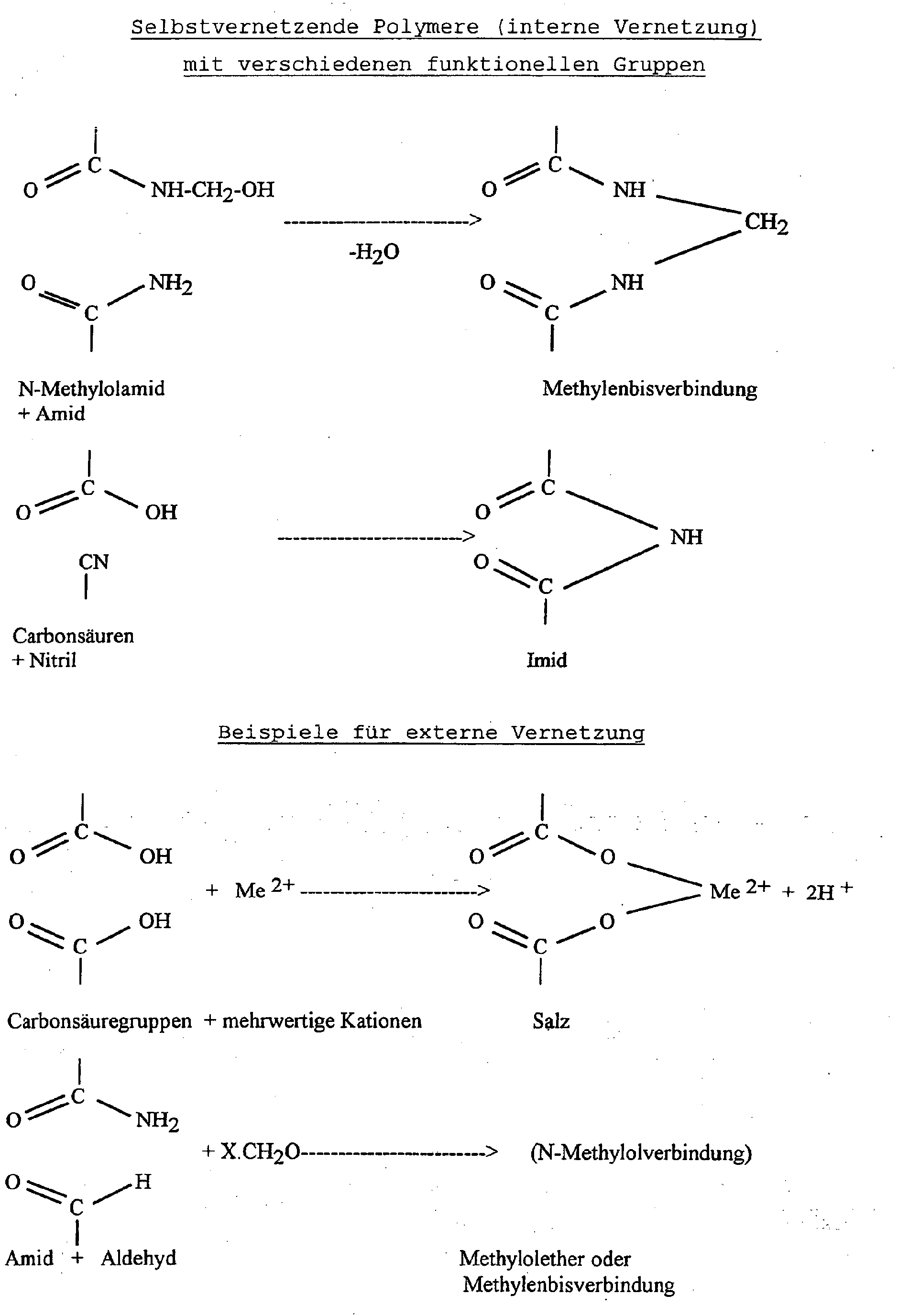

Bei einer erhöhten Restfeuchte, die bei einer Bewitterung oder aber bei einer dauernden Wasserbelastung gegeben ist, erfolgt aber neben diesen Vernetzungsreaktionen auch eine allmähliche Nachhärtung des Zements. Die Zementmatrix durchsetzt die Polymermatrix und bildet letztlich eine kontinuierliche Phase aus. Beide zuletzt beschriebenen Phänomene führen zu einer Versprödung der Beschichtung, unter eventuell totalem Verlust der Elastizität bzw. Dehnungseigenschaften. Die Beschichtung verliert ihre Funktionsfähigkeit.

Bei der Nachhydratation des Zements wird weiteres Ca(OH)₂ freigesetzt, das einerseits zu einer weiteren Vernetzung des Polymers führt, andererseits aber die Konzentration von Calciumsalzen in der Beschichtung erhöht. Letztlich bildet sich aus Ca(OH)₂ durch Reaktion mit CO₂ lösliches CaHCO₃. Die erhöhte Salzkonzentration bewirkt aufgrund von osmotischen Effekten eine weiter erhöhte Wasseraufnahme, d.h. diese beiden Vorgänge verstärken einander. Dies kann zu einer lokalen Zerstörung, verbunden mit einer Ablösung der Beschichtung vom Untergrund führen.

Ziel der vorliegenden Erfindung ist es nun, die vorstehend beschriebenen Effekte, die zu einer kurzfristigen Zerstörung der Beschichtungen in den ersten 3 Jahren führen können, zu minimieren, um alterungsbeständige Beschichtungen, d.h. solche mit einer Funktionsdauer von mindestens 10 Jahren und darüber hinaus, zu erhalten. Dies wird erfindungsgemäß durch die Kombination der folgenden Maßnahmen erreicht:
1) Der Zementgehalt wird soweit reduziert, daß sich auch nach vollständiger Reaktion keine kontinuierliche Zementmatrix mehr bilden kann. Diese Maßnahme führt in Kombination mit den derzeit auf dem Markt befindlichen, in diesem Anwendungsbereich eingesetzten und nicht erfindungsgemäßen Polymeren zu einem hohen Quellungsgrad der Beschichtungen. Aufgrund der geringen Vernetzungsdichte ergibt sich nach Bildung des Films ein geringerer Quellungsdruck und ein höherer Quellungsgrad (Paul J. Flory, Principles of Polymer Chemistry 1967, 581-583, 633-634, Six Printing).
2) Um wieder eine gleiche oder sogar eine höhere Vernetzungsdichte zu erreichen, ist es notwendig, einen Vernetzungsmechanismus für das Polymer zu finden, der unmittelbar oder gleichzeitig mit der physikalischen Auftrocknung wirksam wird, im Unterschied gegenüber der langsamen, oben beschriebenen Nachvernetzung. Alle Vernetzungsmechanismen, die diese Anforderungen erfüllen, sind Gegenstand der vorliegenden Erfindung.

Als Beispiele werden genannt: Polymere, die ein oder mehrere funktionelle Gruppen tragen und eine chemische, nichtionische Bindung mit sich selbst oder mit einem Vernetzer eingehen können. Mögliche funktionelle Verbindungen sind: Alkoxysilane, Epoxide, Isocyanate, Amide, Hydroxide, Carboxylate, Sulfonsäuren, Carbonylverbindungen, Amine oder Hydrazide.

Erfindungsgemäß besonders geeignet sind Copolymere von Vinylsilanen.

Schon diese Maßnahme führt zu einer wesentlichen Verbesserung der Alterungsbeständigkeit, doch wird diese erfindungsgemäß durch eine weitere Maßnahme noch wesentlich verbessert:
3) Die weitere Maßnahme ist die Verwendung einer puzzolanischen Komponente, die sehr rasch bei der Härtung des Zements das freiwerdende Ca(OH)₂ abfängt und in eine unlösliche Silikatform umwandelt. Am besten wird diese Anforderung durch kalziniertes Metakaolin erfüllt.

Ein Zusatzeffekt dieser erfindungsgemäßen Maßnahmen ist es, daß die Verseifungsstabilität der Acrylatpolymeren wesentlich erhöht wird.

Die folgenden Beispiele sollen die Erfindung erläutern, ohne sie jedoch einzuschränken.

### Beispiel 1

Polymer mit einer nach der Fox-Gleichung berechneten Glasumwandlungstemperatur von ca -29°C ,unter Zusatz einer Vinylsilanverbindung.

| | | Beispiel 1.1 | Beispiel 1.2 |
|---|---|---|---|
| | Komponente | Gew % | Gew% |
| Reaktor | Wasser | 40,10 | 39,10 |
| | Disponil AES 13 IS | 4,50 | 4,50 |
| | Disponil NP 10 | 0,90 | 0,90 |
| | Ammoniumeisen-II-sulfat | 0,02 | 0,02 |
| | Zitronensäure | 0,02 | 0,02 |
| | Zinkformaldehydsulfoxylat | 0,06 | 0,06 |
| | | | |
| Zulauf I | Ammoniumperoxodisulfat | 0, 20 | 0, 20 |
| | Wasser | 4,80 | 4,80 |
| | | | |
| Zulauf II | Styrol | 20,00 | 20,00 |
| | 2-Ethylhexylacrylat | 24,00 | 24,00 |
| | Methacrylsäure | 0,90 | 0,90 |
| | Vinyltriethoxysilan | 0 | 1,0 |
| Zulauf III | Zinkformaldehydsulfoxylat | 0,15 | 0,15 |
| | Wasser | 1,85 | 1,85 |
| | | | |
| Zulauf IV | Ethylendiamintetraessigsäure Tetranatriumsalz | 0,1 | 0,1 |
| | Wasser | 0,06 | 0,06 |
| | Polymerdispersion | 100 | 100 |
| | Ammoniak 25 %ig | 0,85 | 0,85 |

### Verfahren

- Wasser, Disponil AES 13 IS, Disponil NP 10, Ammoniumeisen-II-sulfat, Zitronensäure und Zinkformaldehydsulfoxylat vorlegen
- Reaktor mit Stickstoff spülen und auf 40 bis 50°C aufheizen
- 10 % der Menge Monomermischung aus Zulauf II in den Reaktor einbringen
- Mit 10 % der Ammoniumperoxodisulfatlösung aus Zulauf I die Reaktion starten
- Zulauf der Monomermischung und der Starterlösung, bei 57 bis 68°C
- Nachpolymerisation unter Zulauf von Zinkformaldehydsulfoxylatlösung
- Abkühlung auf 30°C, Stabilisierung der Fe²⁺-Ionen mit EDTA-Lösung und Zugabe der Ammoniaklösung.

### Beispiel 2 (vergleichend)

Es wurde mit der Polymerdispersion nach Beispiel 1.1 eine Standardmörtelmischung nach folgender Rezeptur bereitet:
100 g Quarzsand 0,1-0,3 mm
100 g Weißzement PZ 42,5
120 g Polymerdispersion
1 g Betonverflüssiger

### Beispiel 3 (vergleichend)

Wie Beispiel 1, es wurde anstatt der Dispersion nach Beispiel 1.1 die Dispersion aus Beispiel 1.2 eingesetzt.

### Beispiel 4 (vergleichend)

Es wurde mit der Polymerdispersion nach Beispiel 1.1 eine Standardmörtelmischung nach folgender Rezeptur bereitet:
170 g Quarzsand 0,1-0,3 mm
30 g Weißzement PZ 42,5
120 g Polymerdispersion
1 g Betonverflüssiger

### Beispiel 5 (erfindungsgemäß)

Wie Beispiel 4, es wurde anstatt der Dispersion nach Beispiel 1.1 die Dispersion aus Beispiel 1.2 eingesetzt.

### Beispiel 6 (erfindungsgemäß)

Es wurde mit der Polymerdispersion nach Beispiel 1.2 eine Standardmörtelmischung nach folgender Rezeptur bereitet:
167 g Quarzsand 0,1-0,3 mm
30 g Weißzement PZ 42,5
3 g kalziniertes Metakaolin
120 g Polymerdispersion
1 g Betonverflüssiger

### Beispiel 7

Aus den Mörtelmischungen der Beispiele 2 bis 6 wurden 2-3 mm starke Probekörper gefertigt. Nach einer Trocknungszeit von 21 Tagen bei Raumtemperatur wurden die Probekörper einem Zug/Dehnversuch unterworfen. Dabei wurde für die Berechnung des Elastizitätsmoduls nur der Hook'sche Bereich herangezogen.

| Probekörper aus Dispersion von Beispiel | Zugfestigkeit N/mm² | Zugdehnung % | Elastizitätsmodul N/mm² |
|---|---|---|---|
| 2 | 0, 6 | 70 | 3,6 |
| 3 | 0,8 | 40 | 1,9 |
| 4 | 0,3 | 95 | |
| 5 | 0,65 | 80 | 2,4 |
| 6 | 0,7 | 80 | 1,8 |

### Beispiel 8

Aus den Mörtelmischungen der Beispiele 2 bis 6 wurden 2-3 mm starke Probekörper gefertigt. Nach einer Trocknungszeit von 21 Tagen bei Raumtemperatur wurden die Probekörper für eine Dauer von 21 Tagen einer Immersion in Wasser bei Raumtemperatur unterworfen. Danach wurde die Wasseraufnahme der Probekörper nach Abtupfen mit saugfähigem Papier durch Differenzwägung ermittelt und die Probekörper wurden nach dem vollständigen Rücktrocknen einem Zug/Dehnversuch unterworfen.

| Probekörper aus Dispersion von Beispiel | Zugfestigkeit N/mm² | Zugdehnung % | Wasseraufnahme Gew. % | Elastizitätsmodul N/mm² |
|---|---|---|---|---|
| 2 | 0,8 | 30 | 18 | 8,0 |
| 3 | 1,0 | 22 | 15 | 25 |
| 4 | 0,5 | 35 | 103 | |
| 5 | 0,7 | 73 | 8 | 3,3 |
| 6 | 0,7 | 85 | 6 | 2,1 |

### Beispiel 9

Aus den Mörtelmischungen der Beispiele 2 bis 6 wurden 2-3 mm starke Probekörper gefertigt. Nach einer Trocknungszeit von 21 Tagen bei Raumtemperatur wurden die Probekörper für eine Dauer von 21 Tagen einer Immersion in 3%iger Kaliumhydoxidlösung bei 40°C unterworfen. Danach wurde die Wasseraufnahme der Probekörper nach Abtupfen mit saugfähigem Papier durch Differenzwägung ermittelt.

| Probekörper aus Dispersion von Beispiel | Gewichtszunahme % |
|---|---|
| 2 | 25 |
| 3 | 20 |
| 4 | 115 |
| 5 | 12 |
| 6 | 6 |

## Patentansprüche

1. Betonsanierungs- und Abdichtungssysteme auf der Basis Zement/wässrige Kunststoffdispersion, **dadurch gekennzeichnet, dass** sie einen zur Ausbildung einer kontinuierlichen Zementmatrix ungenügenden Zementgehalt aufweisen und dass die Kunststoffdispersion ein Polymer enthält, das ein oder mehrere funktionelle Gruppen trägt und eine chemische, nichtionische Bindung mit sich selbst oder mit einem Vernetzer eingehen kann, wobei das Zement/Polymerverhältnis 0,3 bis 0,7 (Gewichtsteile fest/fest) beträgt und wobei die Kunststoffdispersion ein Acrylatpolymer sowie als Vernetzungskomponente Vinylsilane enthält.

2. Betonsanierungs- und Abdichtungssysteme gemäß Anspruch 1, **dadurch gekennzeichnet, dass** die Kunststoffdispersion als Vinylsilan Vinyltriethoxysilan enthält.

3. Betonsanierungs- und Abdichtungssysteme gemäß einem der Ansprüche 1 oder 2, **dadurch gekennzeichnet, dass** in dem System zusätzlich eine puzzolanische Komponente enthalten ist.

4. Betonsanierungs- und Abdichtungssysteme gemäß Anspruch 3, **dadurch gekennzeichnet, dass** sie als puzzolanische Komponente kalziniertes Metakaolin enthalten.

5. Verwendung von Betonsanierungs- und Abdichtungssystemen nach einem der Ansprüche 1 bis 4 zur Herstellung von rissüberbrückenden Beschichtungen.

6. Rissüberbrückende Beschichtungen enthaltend ein Betonsanierungs- und Abdichtungssystem gemäß einem der Ansprüche 1 bis 4.

## Claims

1. A concrete renovation and sealing system based on cement/aqueous polymeric dispersion, having a cement content insufficient for the formation of a continuous cement matrix, the polymeric dispersion comprising a polymer which carries one or more functional groups and is able to enter into a chemical, nonionic bond with itself or with a crosslinker, the cement/polymer ratio being 0.3 to 0.7 (parts by weight solid/solid), and the polymeric dispersion comprising an acrylate polymer and also vinylsilanes as crosslinking component.

2. The concrete renovation and sealing system according to claim 1, wherein vinylsilane in the polymeric dispersion comprises vinyltriethoxysilane.

3. The concrete renovation and sealing system according to either of claims 1 and 2, further comprising a pozzolanic component.

4. The concrete renovation and sealing system according to claim 3, comprising calcined metakaolin as pozzolanic component.

5. The use of a concrete renovation and sealing system according to any of claims 1 to 4 to produce a crack-bridging coating.

6. A crack-bridging coating comprising a concrete renovation and sealing system according to any of claims 1 to 4.

## Revendications

1. Systèmes de rénovation de béton et d'étanchéité à base de ciment/dispersion aqueuse de matériau synthétique, **caractérisés en ce qu'**ils présentent une teneur en ciment insuffisante pour former une matrice de ciment continue et **en ce que** la dispersion de matériau synthétique contient un polymère qui porte un ou plusieurs groupes fonctionnels et qui peut participer à une liaison chimique, non ionique avec lui-même ou avec un réticulant, le rapport ciment/polymère étant de 0,3 à 0,7 (partie en poids solide/solide) et la dispersion de matériau synthétique contenant un polymère d'acrylate ainsi que, comme composant de réticulation, des vinylsilanes.

2. Systèmes de rénovation de béton et d'étanchéité selon la revendication 1, **caractérisés en ce que** la dispersion de matériau synthétique contient, comme vinylsilane, du vinyltriéthoxysilane.

3. Systèmes de rénovation de béton et d'étanchéité selon l'une quelconque des revendications 1 ou 2, **caractérisés en ce que** le système contient en outre un composant pouzzolanique.

4. Systèmes de rénovation de béton et d'étanchéité selon la revendication 3, **caractérisés en ce qu'**ils contiennent, comme composant pouzzolanique, du métakaolin calciné.

5. Utilisation de systèmes de rénovation de béton et d'étanchéité selon l'une quelconque des revendications 1 à 4 pour la préparation de revêtements recouvrant les fissures.

6. Revêtements recouvrant les fissures contenant un système de rénovation de béton et d'étanchéité selon l'une quelconque des revendications 1 à 4.
